# EUROPEAN PATENT SPECIFICATION

(11) **EP 1 059 844 B1**
(45) Date of publication and mention of the grant of the patent: **03.05.2006**
(21) Application number: 99909902.1
(22) Date of filing: 05.03.1999
(51) Int. Cl.: A01N 43/78, A01N 43/653, B27K 3/50, C14C 9/00

(54) **Microbiocidal methods using combinations of propiconazole and 2-mercaptobenzothiazole**
Mikrobiozide Verfahren unter Verwendung von Kombinationen von Propiconazol und 2-Mercaptobenzothiazolen
Procédes microbiocides utilisant des combinaisons de propiconazole et de 2-mercaptobenzothiazole

(30) Priority: 05.03.1998 US 76907 P
(43) Date of publication of application: 20.12.2000
(73) Proprietor: BUCKMAN LABORATORIES INTERNATIONAL, INC., Memphis Tennessee 38108 (US)
(72) Inventor: PILLAY, Allan, Shallcross, 4093 (ZA)
(74) Representative: Matthews, Derek Peter
(86) International application number: PCT/US1999/005014
(87) International publication number: WO 1999/044424

(56) References cited:
- EP-A- 0 393 746
- EP-A- 0 741 969
- WO-A-96/01054
- WO-A-96/15885
- WO-A-97/39865
- WO-A-98/42190
- GB-A- 2 025 769

## Description

### Field of the invention

The present invention relates to compositions and methods for controlling the growth of microorganisms on pulp or paper in a papermakup process and in aqueous systems. More particularly, the invention relates to a synergistic combination of propiconazole, also known as (RS)-1-2-[(2,4-dichlorophenyl)-4-propyl-1,3-dioxalan-2-ylmethyl]-1H-1,2,4-triazole, and 2-mercaptobenzothiazole or an alkali metal salt thereof.

### Background of the Invention

A large variety of commercial, industrial, agricultural, and wood materials or products are subject to microbiological attack or degradation which reduces or destroys their economic value. Examples of such materials or products include surface coatings, lumber, seeds, plants, leather and plastics. The various temperatures at which such materials or products are manufactured, stored, or used as well as their intrinsic characteristics make them susceptible to growth, attack, and degradation by common microorganisms such as algae, fungi, yeasts, and bacteria. These microorganisms may be introduced during a manufacturing or other industrial process, by exposure to air, tanks, pipes, equipment, and humans. They can also be introduced while using a material or product, for example, by multiple openings and reclosures of packages or from stirring or removing material with contaminated objects.

Aqueous systems are also highly subject to microbiological growth, attack, and degradation. These aqueous systems may be fresh, brackish or saltwater systems. Exemplary aqueous systems include, but are not limited to, latexes, surfactants, dispersants, stabilizers, thickeners, adhesives, starches, waxes, proteins, emulsifying agents, cellulose products, metal working fluids, cooling water, waste water, aqueous emulsions, aqueous detergents, coating compositions, paint compositions, and resins formulated in aqueous solutions, emulsions or suspensions. These systems frequently contain relatively large amounts of water and organic material causing them to be environments well-suited for microbiological growth and thus attack and degradation.

Microbiological degradation of aqueous systems may manifest itself as a variety of problems, such as loss of viscosity, gas formation, objectionable odors, decreased pH, emulsion breaking, color change, and gelling. Additionally, microbiological deterioration of aqueous systems can cause fouling of the related water-handling system, which may include cooling towers, pumps, heat exchangers, and pipelines, heating systems, scrubbing systems, and other similar systems.

Another objectionable phenomenon occurring in aqueous systems, particularly in aqueous industrial process fluids, is slime formation. Slime formation can occur in fresh, brackish or salt water systems. Slime consists of matted deposits of microorganisms, fibers and debris. It may be stringy, pasty, rubbery, tapioca-like, or hard, and may have a characteristic undesirable odor that is different from that of the aqueous system in which it formed The microorganisms involved in its formation are primarily different species of spore-forming and non-spore-forming bacteria, particularly capsulated forms of bacteria which secrete gelatinous substances that envelop or encase the cells. Slime microorganisms also include filamentous bacteria, filamentous fungi of the mold type, yeast, and yeast-like organisms. Slime reduces yields in production and causes plugging, bulking, and other problems in industrial water systems.

Various chemicals known as microbicide have been used to prevent microbiological deterioration of industrial systems, raw materials, and products. See e.g. WO 96/01054, EP 0393746, WO 97/39865, WO 96/15885 and GB 2025769. Despite the existence of such microbicide, industry is constantly seeking more cost-effective technology which offers equal or better protection at lower cost and lower concentration. The concentration of conventional microbicide and the corresponding treatment costs for such use, can be relatively high. Important factors in the search for cost-effective microbicide include the duration of microbicidal effect, the ease of use and the effectiveness of the microbicide per unit weight

### Summary of the Invention

In view of industry's search for more cost effective microbicide, the invention offers an improvement over current products or practices.

One embodiment of the invention provides a method for controlling the growth of microorganisms in an aqueous system capable of supporting growth of a microorganism. This method treats the aqueous system with propiconazole and 2-mercaptobenzothiazole. Propiconazole and 2-mercaptobenzothiazole are present in a combined amount synergistically effective to control the growth of at least one microorganism in the aqueous system.

Another embodiment provides a method for controlling the growth of microorganisms on pulp or paper in a papermaking process, comprising the step of contacting the pulp or paper with propiconazole, and 2-mercaptobenzothiazole or an alkali metal salt thereof, wherein the propiconazole and the 2-mercaptobenzothiazole or an alkali metal salt thereof are present in a combined amount synergistically effective to control the growth of at least one microorganism.

Preferably the microorganism is selected from algae, fungi, mold, and bacteria.

The foregoing and other features and advantages of the invention will be made more apparent from the following detailed description and preferred embodiments.

### Detailed Description of the Invention

When two chemical microbiocides are used in combination, either in a single composition or as two separate additions at the point of use, three results are possible: 1) an additive (neutral) effect; 2) an antagonistic effect; or 3) a synergistic effect. An additive (neutral) effect has no economic advantage over the individual microbiocides. An antagonistic effect would produce a negative result. Only synergism, which is much less likely than an additive or an antagonistic effect, gives a positive result and, therefore possesses economic advantages. According to the invention, the combination of propiconazole and 2-mercaptobenzothiazole (2-MBT) or an alkali metal salt thereof demonstrates an unexpected, synergistic microbicidal effect. The-combination of propiconazole and 2-MBT, therefore, achieves superior microbicidal activity at lower propiconazole and 2-MBT concentrations as compared to the microbicidal capability of propiconazole or 2-MBT alone. Such a superior effect presents a distinct economic advantage and increases propiconazole's effectiveness per unit weight

Propiconazole, (RS)-1-2-[(2,4-dichlorophenyl)-4-propyl-1,3-dioxalan-2-ylmethyl]-1H-1,2,4-triazole, is a known fungicide (U.S. Patent Nos. 5,627,188, 5,567,705, 5,403,844, 5,326,777, 5,250,559 and 5,200,421). Propiconazole has the following chemical structure: 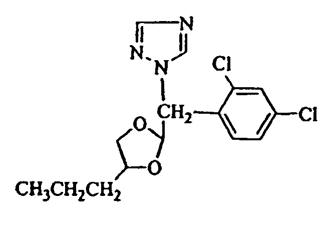 Propiconazole is available under the BUSAN® 1292 tradename from Buckman Laboratories Inc., Memphis, Tennessee and under the WOCASEN 250EC tradename from Janssen Pharmaceutica, Titusville, New Jersey. BUSAN® 1292 is a formulation containing 23.6% propiconazole and 75% inert ingredients including a nonylphenol ethyleneoxide/polyethylene oxide surfactant

2-mercaptobenzothiazole and the alkali metal salts thereof have microbiocidal activity and have the following chemical structure: 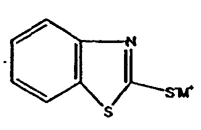 wherein M is hydrogen or an alkali metal. Preferably, M is sodium or potassium. In the context of the invention, the term "2-MBT" refers to 2-mercaptobenzothiazole and the alkali metal salts thereof. Sodium 2-mercaptobenzothiazole is available under the BUSAN® 1214 tradename from Buckman Laboratories Inc., Memphis, Tennessee. BUSAN® 1214 is a 50% aqueous formulation of sodium 2-mercaptobenzothiazole.

Depending on the application, microbicidal compositions according to the invention may be prepared in various forms known in the art. For example, the composition may be prepared in liquid form as an aqueous solution, dispersion, emulsion, or suspension, a dispersion or suspension in a non-solvent, or as a solution by dissolving propiconazole and 2-MBT in a solvent or combination of solvents. Suitable solvents include, but are not limited to, methyl ethers of glycols, M-pyrol or 1-methyl-pyrrolidinone, or petroleum distillates. The microbicidal composition may be prepared as a concentrate for dilution prior to its intended use. Common additives such as surfactants, emulsifiers, dispersants, and the like may be used as known in the art to increase the solubility of propiconazole or 2-MBT in a liquid composition or system, such as an aqueous composition or system. In many cases, the microbicidal composition of the invention may be prepared by mixing liquid formulations of propiconazole and 2-MBT by simple agitation.

Microbicidal compositions of the invention may also be prepared in solid form, for example as a powder or tablet, using means known in the art. For example, a liquid product containing propiconazole or 2-MBT is deposited on carriers such as diatomaceous earth or kaolin. The resulting solid or solids may be mixed together or one solid may be mixed with the other component, or a solution or liquid formulation containing the component, to form a powder or tablet.

The propiconazole and 2-MBT may be combined in a single composition. Alternatively, the propiconazole and 2-MBT may be employed as separate components such that combined amount for the intended use is effective to control the growth of at least one microorganism.

As discussed above, the combination of propiconazole and 2-MBT possesses a synergistic microbicidal effect to control the growth of at least one microorganism as compared to the microbicidal capability of the propiconazole or 2-MBT alone. According to the invention, control of the growth of a microorganism in an aqueous system means control to, at, or below a desired level and for a desired period of time for the particular substrate or system. This can vary from the complete prevention or inhibition of microbiological growth to control at a certain desired level and for a desired time. The synergistic combination of propiconazole and 2-MBT described here can, in many cases, reduce the total microbiological count to undetectable limits and maintain the count at that level for a significant period of time. Accordingly, the combination may be used to preserve a substrate or system.

The effective amount or percentage of the synergistic combination of propiconazole and 2-MBT necessary to achieve the desired result will vary somewhat depending on the aqueous system to be protected, the conditions for microbial growth, the particular microbicide, and the degree of protection desired. For a particular application, the amount of choice may be determined by routine testing of various amounts prior to treatment of the entire affected substrate or system. In general, an effective amount used on a substrate ranges from about 0.0001% to about 4% (w/w); preferably about 0.0001% to about 1.0%. With aqueous systems, an effective amount may range from about 0.5 to about 10,000 parts per million, more preferably from about 5 to about 5000 parts per million of the aqueous system, and most preferably from, about 10 to about 1000 parts per million. Similar amounts effectively control slime formation. For slime control, effective amounts preferably range from about 1 to about 1000 parts per million, and more preferably, from about 1 to about 200 parts per million of the aqueous system.

In a preferred embodiment, combinations of propiconazole and 2-MBT are those synergistic combinations where the weight ratio of propiconazole to 2-MBT range from about 99:1 to about 1:99. More preferably the weight ratio is from about 60: 10 to about 10:60, and most preferably, from about 50:50 to about 25:75. The weight ratio may vary depending on the microbicide, the intended use, the microorganism encountered as well as the particular material, product, or system to which the combination according to the invention is applied.

The synergistic combination of propiconazole and 2-MBT may be applied in a variety of industrial uses and processes for microorganism control. The combination may be used in place of and in the same manner as other microbiocides traditionally used in the particular industry. As discussed above, such industries include, but are not limited to the leather industry, the lumber industry, the papermaking industry, the textile industry, the agricultural industry, and the coating industry. The combination of propiconazole and 2-MBT may also be used with aqueous systems such as those previously discussed which are subject to microbiological attack and degradation. The problems caused by microbiological attack and deterioration in these various applications has been described above. The use of a synergistic combination of propiconazole and 2-MBT according to the invention to control the growth of microorganisms in particular exemplary applications is described below.

The invention is thus a method for controlling the growth of microorganisms in an aqueous system capable of supporting such growth. The aqueous system is treated with propiconazole and 2-MBT such that the propiconazole and 2-MBT are present in a combined amount synergistically effective to control the growth of at least one microorganism in the aqueous system. This includes controlling, and preferably preventing, slime formation in the aqueous system.

Examples of various aqueous systems include, but are not limited to, latexes, surfactants, dispersants, stabilizers, thickeners, adhesives, starches, waxes, proteins, emulsifying agents, cellulose products, aqueous emulsions, aqueous detergents, coating compositions, paint compositions, alum compositions, and resins formulated in aqueous solutions, emulsions or suspensions. The combination may also be employed in aqueous systems used in industrial processes such as metal working fluids, cooling waters (both intake cooling water and effluent cooling water), and waste waters including waste waters or sanitation waters undergoing treatment of the waste in the water, e.g. sewage treatment.

The synergistic combination of the invention may be used in the same amounts and in the same manner as microbiocides traditionally used in these various aqueous systems. The combination not only protects the aqueous system prior to use or when stored, but in many cases protects the aqueous system when in use or in appropriate applications even after the aqueous system has dried When used in a paint formulation for example, the combination not only protects the paint in the can, but also the paint film after being applied to a substrate.

Another embodiment of the invention is a method for controlling the growth of microorganisms on pulp paper in a papermaking process, e.g., in a pulp or paper slurry. The pulp, or slurry is contacted with propiconazole and 2 -MBT in a combined amount synergistically effective to control the growth of at least one microorganism on the pulp or in a slurry. The contacting step is accomplished using means and amounts known in the papermaking art.

According to this aspect of the invention, for example, a forming web on a papermaking machine (or a wet-lap pulp) may be contacted with the synergistic combination of propiconawle and 2-MBT by spraying an aqueous dispersion containing the propiconazole and 2-MBT onto the pulp after the pulp leaves the presses in a papermaking process. Or, the propiconazole and 2-MBT may be incorporated into a bath used at the wet or size press and the web contacted by nipping the web to incorporate the combination into the web with any other agents applied at the press. Alternatively, the pulp may be contacted by mixing the propiconazole and 2-MBT into the pulp/white water mixture, preferably prior to the pulp rea ching the formation wire.

## Claims

1. A method for controlling the growth of microorganisms in an aqueous system capable of supporting growth of a microorganism comprising the step of treating the aqueous system with propiconazole and 2-mercaptobenzothiazole or an alkali metal salt thereof, wherein the propiconazole and the 2-mercaptobenzothiazole or an alkali metal salt thereof are present in a combined amount synergistically effective to control the growth of at least one microorganism.

2. A method according to claim 1, wherein the microorganism is selected from algae, fungi, mold and bacteria.

3. A method according to claim 1, wherein said aqueous system is selected from the group consisting of a latex, a metal working fluid, an aqueous emulsion, an aqueous detergent, cooling water, and an aqueous resin formulation.

4. A method for controlling the growth of microorganisms on pulp or paper in a papermaking process, comprising the step of contacting the pulp or paper with propiconazole, and 2-mercaptobenzothiazole or an alkali metal salt thereof, wherein the propiconazole and the 2-mercaptobenzothiazole or an alkali metal salt thereof are present in a combined amount synergistically effective to control the growth of at least one microorganism.

5. A method according to claim 4, wherein the pulp is contacted by mixing the propicanazole and 2-mercaptobenzothiazole or an alkali metal salt thereof into a pulp slurry prior to reaching a formation wire in a papermaking process.

6. A method according to claim 4, wherein the microorganism is selected from algae, fungi, mold and bacteria.

## Patentansprüche

1. Verfahren zum Bekämpfen des Wachstums von Mikroorganismen in einem wässrigen System, das zum Unterstützen des Wachstums eines Mikroorganismus befähigt ist, umfassend den Schritt des Behandelns des wässrigen Systems mit Propiconazol und 2-Mercaptobenzothiazol oder einem Alkalimetallsalz davon, worin das Propiconazol und das 2-Mercaptobenzothiazol oder ein Alkalimetallsalz davon in einer kombinierten Menge vorhanden ist, die synergistisch wirksam ist, um das Wachstums wenigstens eines Mikroorganismus zu bekämpfen.

2. Verfahren gemäß Anspruch 1, worin der Mikroorganismus ausgewählt ist aus Algen, Pilzen, Schimmel und Bakterien.

3. Verfahren gemäß Anspruch 1, worin das wässrige System ausgewählt ist aus der Gruppe bestehend aus einem Latex, einer Metallbearbeitungsflüssigkeit, einer wässrigen Emulsion, einem wässrigen Detergens, Kühlwasser und einer wässrigen Harzformulierung.

4. Verfahren zum Bekämpfen des Wachstums eines Mikroorganismus auf Pulpe oder Papier in einem Papierherstellungsverfahren, umfassend den Schritt des Kontaktierens der Pulpe oder des Papiers mit Propiconazol und 2-Mercaptobenzothiazol oder einem Alkalimetallsalz davon, worin das Propiconazol und das 2-Mercaptobenzothiazol oder ein Alkalimetallsalz davon in einer kombinierten Menge vorhanden sind, die synergistisch wirksam ist, um das Wachstums wenigstens eines Mikroorganismus zu bekämpfen.

5. Verfahren gemäß Anspruch 4, worin die Pulpe durch Vermischen von Propiconazol und 2-Mercaptobenzothiazol oder einem Metallsalz davon in einer Pulpenaufschlämmung kontaktiert wird, bevor sie einen Bildungsdraht in einem Papierherstellungsverfahren erreicht.

6. Verfahren gemäß Anspruch 4, worin der Mikroorganismus ausgewählt ist aus Algen, Pilzen, Schimmel und Bakterien.

## Revendications

1. Procédé pour combattre la croissance de micro-organismes dans un système aqueux pouvant entretenir la croissance d'un micro-organisme comprenant l'étape de traitement du système aqueux par du propiconazole et du 2-mercaptobenzothiazole ou un sel de métal alcalin de celui-ci, dans lequel le propiconazole et le 2-mercaptobenzothiazole ou son sel de métal alcalin sont présents en une quantité combinée synergiquement efficace pour combattre la croissance d'au moins un micro-organisme.

2. Procédé suivant la revendication 1, dans lequel le micro-organisme est choisi parmi les algues, les champignons, la moisissure et les bactéries.

3. Procédé suivant la revendication 1, dans lequel le système aqueux précité est choisi dans le groupe comprenant un latex, un fluide pour le travail des métaux, une émulsion aqueuse, un détergent aqueux, une eau de refroidissement et une formulation de résine aqueuse.

4. Procédé pour combattre la croissance de micro-organismes sur de la pâte ou du papier dans un procédé de fabrication de papier, comprenant l'étape de mise en contact de la pâte ou du papier avec du propiconazole et du 2-mercaptobenzothiazole ou un sel de métal alcalin de celui-ci, dans lequel le propiconazole et le 2-mercaptobenzothiazole ou son sel de métal alcalin sont présents en une quantité combinée synergiquement efficace pour combattre la croissance d'au moins un micro-organisme.

5. Procédé suivant la revendication 4, dans lequel la pâte est mise en contact en mélangeant le propiconazole et le 2-mercaptobenzothiazole ou son sel de métal alcalin dans une pâte liquide avant d'atteindre une toile métallique de formation dans un procédé de fabrication de papier.

6. Procédé suivant la revendication 4, dans lequel le micro-organisme est choisi parmi les algues, les champignons, la moisissure et les bactéries.
